# FASCICULE DE BREVET EUROPEEN

(11) **EP 0 381 564 B1**
(45) Date de publication et mention de la délivrance du brevet: **05.05.1993**
(21) Numéro de dépôt: 90400230.0
(22) Date de dépôt: 26.01.1990
(51) Int. Cl.: A47J 37/08

(54) **Dispositif mécanique de verrouillage et de déverrouillage du chariot porte-pains d'un grille-pain**
Mechanische Vorrichtung zum Verriegeln oder Öffnen des Aufnahmefachs eines Brotrösters
Mechanical device to lock or unlock the break compartment of a toaster

(30) Priorité: 01.02.1989 FR 8901276
(43) Date de publication de la demande: 08.08.1990
(73) Titulaire: SEB S.A., F-21260 Selongey (FR)
(72) Inventeur: Eisenberg, Roger, F-57157 Marly (FR)
(74) Mandataire: Keib, Gérard

(56) Documents cités:
- US-A- 2 288 748
- US-A- 2 954 451
- US-A- 4 402 258

## Description

La présente invention concerne un dispositif mécanique de verrouillage et déverrouillage du chariot porte-pains monté coulissant verticalement dans un grille-pain, ce dispositif assurant le verrouillage du chariot en position basse et la remontée de celui-ci étant assurée par un ressort de rappel.

Habituellement, le déverrouillage du chariot et la remontée automatique de celui-ci sont commandées automatiquement lorsque la durée préréglée de fonctionnement d'une temporisation est écoulée.

Le US-A-2 288 748 décrit un dispositif mécanique de verrouillage comprenant de part et d'autre de son plan de symétrie deux bielles articulées l'une à l'autre et dont les extrémités opposées à l'articulation commune sont articulées respectivement en un point fixe et en un point du chariot. Des moyens de retenue permettant de maintenir momentanément le chariot en position basse.

Le but de la présente invention est de perfectionner les dispositifs connus en améliorant la précision et la fiabilité de ceux-ci.

Suivant l'invention, ce dispositif perfectionné comprend une bielle supérieure articulée à une bielle inférieure, l'extrémité de la bielle supérieure opposée à l'articulation commune étant articulée en un point fixe et l'extrémité de la bielle inférieure opposée à l'articulation commune étant articulée au chariot, et est caractérisé en ce qu'un levier intermédiaire s'étendant transversalement à la bielle supérieure est articulé à cette dernière contre l'action d'un ressort, l'extrémité de ce levier comprenant un bec susceptible de s'accrocher à un cran de retenue fixe lorsque le chariot est déplacé en position inférieure, ce verrouillage étant maintenu par la force exercée vers le haut du ressort de rappel du chariot et des moyens étant prévus pour appliquer une traction à l'extrémité du levier intermédiaire pour faire pivoter celui-ci et déverrouiller le bec par rapport au cran afin de permettre la remontée du chariot. C'est la revendication 1 qui contient une définition complète de l'invention.

Ainsi, il suffit d'appliquer une légère traction verticale à l'extrémité du levier intermédiaire précité pour commander la remontée du chariot.

Selon une version avantageuse de l'invention, en position de verrouillage, la droite rejoignant l'articulation fixe de la bielle supérieure et l'articulation de la bielle inférieure au chariot est située légèrement en-deça de l'articulation commune des deux bielles, la force de rappel du ressort du chariot s'exerçant dans un plan vertical s'étendant au-delà de l'articulation commune précitée.

Cette disposition permet de réduire la force de traction à exercer sur le levier intermédiaire pour le déverrouiller.

Selon une version préférée de l'invention, les moyens pour appliquer une traction verticale sur l'extrémité du levier comprennent une lame reliée à un bilame pouvant s'incurver sous l'effet de la chaleur, cette lame et cette extrémité du levier comprenant des moyens de verrouillage complémentaires et ce bilame étant capable de réaliser sur la lame une traction suffisante pour faire pivoter le levier et déverrouiller celui-ci.

D'autres particularités et avantages de l'invention apparaîtront encore dans la description ci-après.

Aux dessins annexés, donnés à titre d'exemples non limitatifs :
- la figure 1 est une vue en perspective partielle d'un grille-pain munie d'une platine latérale destinée à supporter des connexions électriques,
- la figure 2 est une vue en plan d'une platine d'un grille-pain supportant le chariot coulissant destiné à remonter les tranches de pain,
- la figure 3 est une vue en plan éclatée montrant le chariot, son ressort de rappel et sa tige de guidage,
- la figure 4 est une vue en plan du dispositif de commande mécanique et électrique du chariot, celui-ci étant en position haute,
- la figure 5 est une vue analogue à la figure 4, le chariot étant en position basse,
- la figure 6 est une vue analogue à la figure 5, montrant l'action du bilame sur la lame de comamnde du déclenchement du mécanisme de remontée du chariot,
- la figure 7 est une vue en plan de la lame de commande,
- la figure 8 est une vue en perspective éclatée du dispositif de commande mécanique et électrique du chariot,
- la figure 9 est un diagramme de fonctionnement.

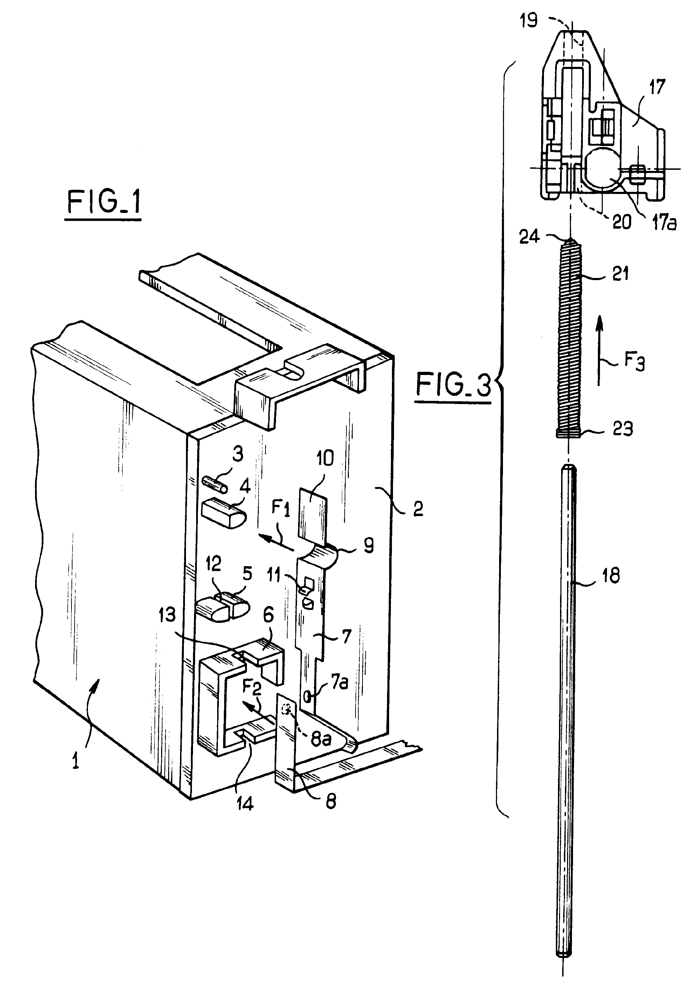

Dans la réalisation de la figure 1, le grille-pain comporte sur l'une de ses faces latérales d'extrémité une platine 2 moulée en matière plastique et dont les dimensions correspondent sensiblement à celles de ladite face latérale.

Cette platine 2 en matière plastique électriquement isolante sert à la fois de support mécanique et électrique.

Dans l'exemple représenté, la platine 1 présente sur sa face extérieure un certain nombre de languettes ou protubérances 3, 4, 5, 6 moulées en même temps que la platine destinées à recevoir et à positionner directement (sans isolant ou pièce de fixation supplémentaire) des lames de contact et de connexion métalliques telles que 7, 8. Ces lames 7, 8 servent à commander le fonctionnement du grille-pain par l'intermédiaire d'un dispositif de temporisation non représenté sur la figure 1.

Les languettes ou protubérances 3, 4, 5, 6 ménagées sur la platine 2 sont conformées pour pouvoir être démoulées par extraction dans une direction perpendiculaire à la platine 2.

De même, ces languettes ou protubérances 3, 4, 5, 6 sont conformées pour recevoir et positionner les lames 7, 8 par un simple mouvement de celles-ci perpendiculairement à la platine 2 (voir flèche F₁ et F₂). Ce mouvement peut être exécuté très simplement par un robot ou un bras manipulateur.

Ainsi, la lame 7 présente une partie pliée en U 9 qui vient s'appliquer sur une surface complémentaire de la protubérance 4, tandis que l'extrémité 10 de cette lame 7 vient prendre appui contre la languette 3 située au-dessus de la protubérance 4.

La lame 7 comporte sous la partie en U 9 deux languettes élastiques 11 qui viennent s'encliqueter sur la partie gauche de la protubérance 5 qui est séparée de la partie droite de celle-ci par une fente 12 qui reçoit la lame 7 proprement dite. Cette lame 7 s'engage également dans la fente supérieure 13 ménagée dans la protubérance 6 en forme de cuvette rectangulaire. La fente inférieure 14 de cette protubérance 6 reçoit la lame 8.

Les lames 7 et 8 présentent en regard l'une de l'autre des contacts 7a, 8a aptes à établir un contact électrique entre ces deux lames lorsqu'elles sont sollicitées l'une vers l'autre.

Les languettes et protubérances 3, 4, 5, 6 assurent un positionnement extrêmement précis des lames 7, 8 l'une par rapport à l'autre, ce qui assure une excellente fiabilité, tout en permettant un moulage facile et sans pièces supplémentaires telles que vis ou analogue.

Bien entendu, la platine 2 peut comporter d'autres protubérances ou évidements facilement moulables pouvant recevoir d'autres organes ou accessoires dont la mise en place est également robotisable.

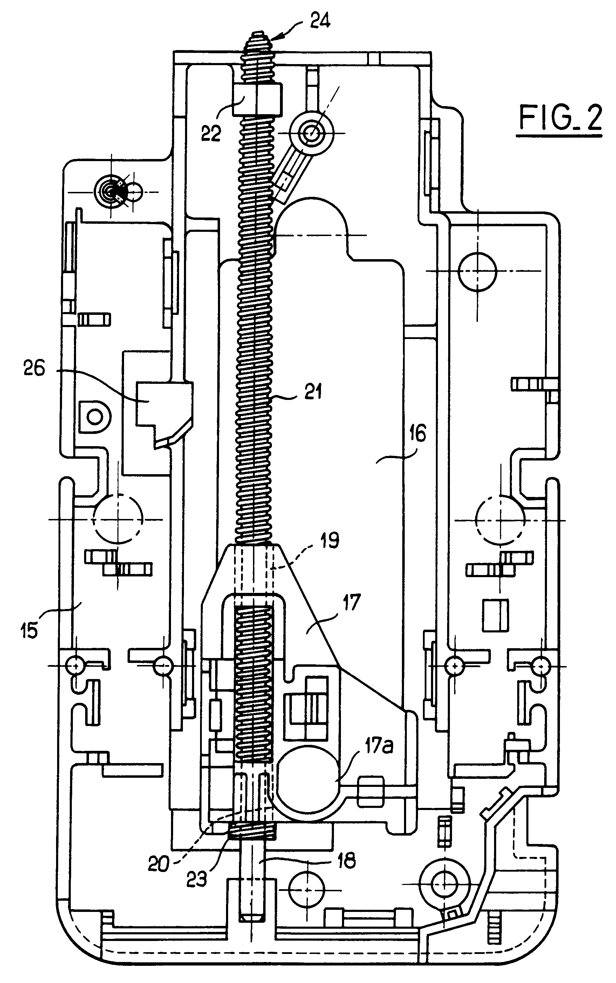

Dans la réalisation de la figure 2, la platine 15 qui est prévue sur l'une des faces d'extrémité du grille-pain présente un évidement central 16.

Dans cet évidement 16 est monté un chariot 17 coulissant verticalement du bas vers le haut et vice-versa. Ce chariot 17 est manoeuvrable par un organe de préhension non représenté, fixé dans l'orifice 17a.

Sur la figure 2, le chariot 17 est en position basse. Ce chariot 17 supporte un bras horizontal (non représenté) qui supporte les tranches de pain à griller.

Le chariot 17 est guidé dans son mouvement de coulissement vertical par une tige verticale 18 qui est engagée dans des ouvertures cylindriques 19, 20 ménagées en haut et en bas du chariot 17. Ces ouvertures 19, 20 ont un diamètre nettement supérieur à celui de la tige 18, correspondant en fait au diamètre du ressort hélicoïdal 21 monté sur la tige 18. Ce ressort 21 s'étend pratiquement sur toute la hauteur de la platine 15. Son extrémité supérieure 24a est conique et est emboîtée à la partie supérieure de la tige 18, alors que son extrémité inférieure présente un diamètre élargi 23 qui vient en butée contre le pourtour de l'ouverture inférieure 20 du chariot 17.

Dans la position représentée sur la figure 2, le chariot 17 est en position basse et le ressort 21 est tendu. Le chariot 17 est verrouillé dans cette position par un organe non représenté sur la figure 2. Lorsque cet organe est déverrouillé, le chariot 17 est rappelé vers le haut par le ressort 21, ce qui remonte en même temps les tranches de pain.

Lors du déplacement du chariot 17, le ressort 21, outre sa fonction de rappel, sert également de portée de coulissement. Etant donné que les efforts s'exercent exactement dans l'axe de la tige 18, le chariot 17 n'est soumis à aucun couple tendant à provoquer des frottements, et une usure des portées du chariot.

De plus, étant donné que le ressort 21 est coaxial à la tige 18, la structure de l'ensemble est très compacte.

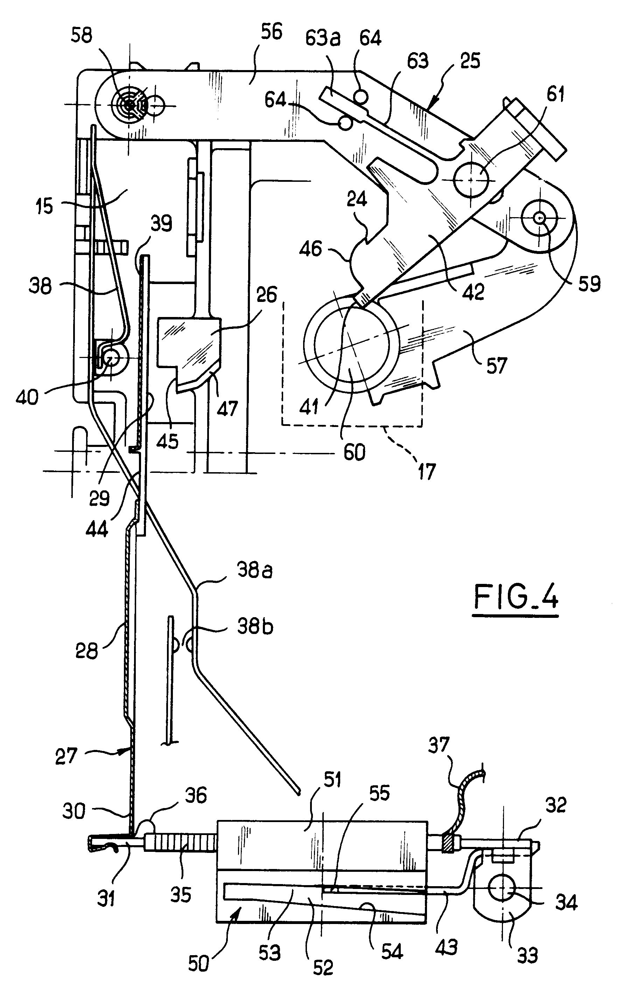

La figure 3 illustre le montage de l'ensemble tige 18, ressort 21 et chariot 17.

Dans un premier temps, on monte le ressort 21 dans les ouvertures 20 et 19 du chariot 17 dans le sens de la flèche F₃ . Cette introduction est facilitée par le fait que l'extrémité supérieure 24a du ressort 21 est conique.

La partie arrière élargie 23 du ressort 21 permet de l'arrêter sous l'ouverture 20 du chariot 17.

Il suffit ensuite d'engager la tige 18 dans le ressort 21 en place dans le chariot.

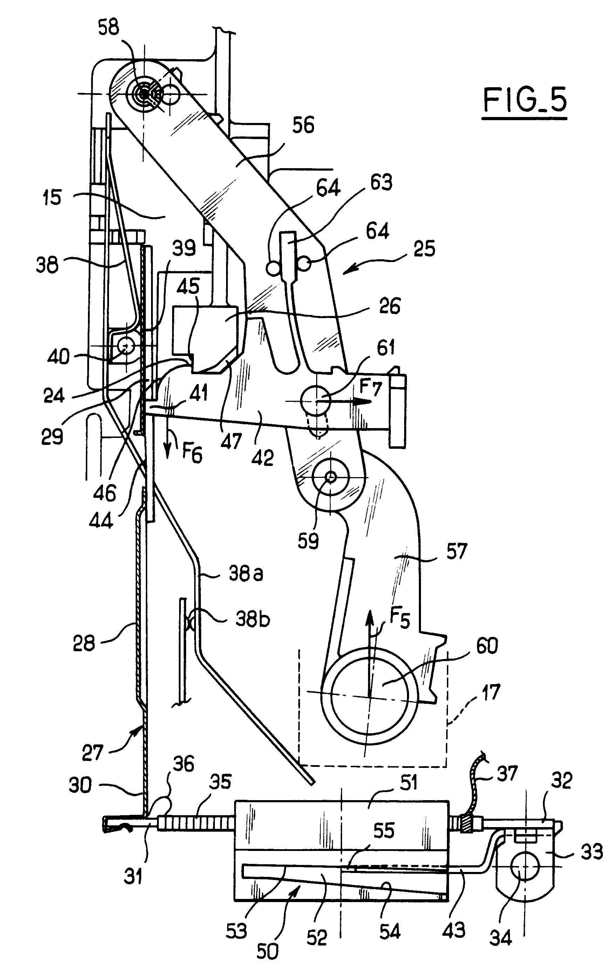

Dans la réalisation des figures 4 et 5, on a représenté le système de commande du déplacement du chariot 17 (représenté en pointillé). On rappellera tout d'abord les principes connus. Dans la position de repos, représentée sur la figure 4, le chariot 17 est en position haute. Lorsque l'utilisateur désire griller des tranches de pain, il met le chariot 17 en position basse. Dans le présent mode de réalisation, et comme indiqué sur la figure 5, le ressort 21 (voir figure 2) associé au chariot 17 est tendu et ce chariot est verrouillé grâce au bec 24 porté par un mécanisme 25 solidaire du chariot 17, en prise avec un organe d'arrêt 26 solidaire de la platine 15 (voir également figure 2). Le mécanisme 25 sera décrit en détail plus loin.

On va maintenant décrire le dispositif qui permet de commander le déverrouillage du chariot 17, lorsque les tranches de pain sont suffisamment grillées.

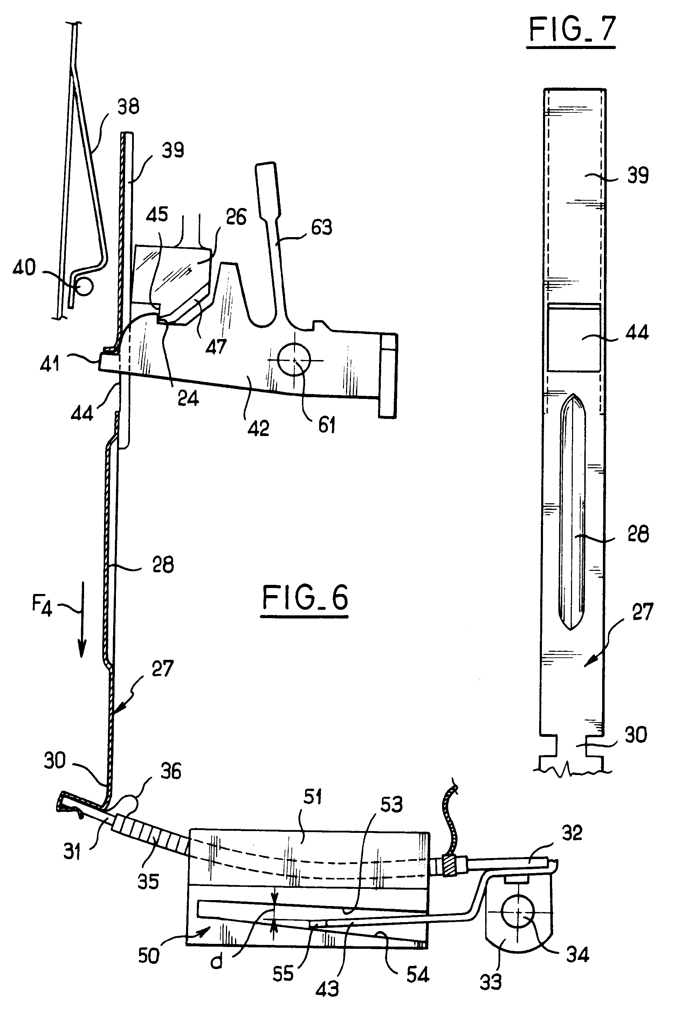

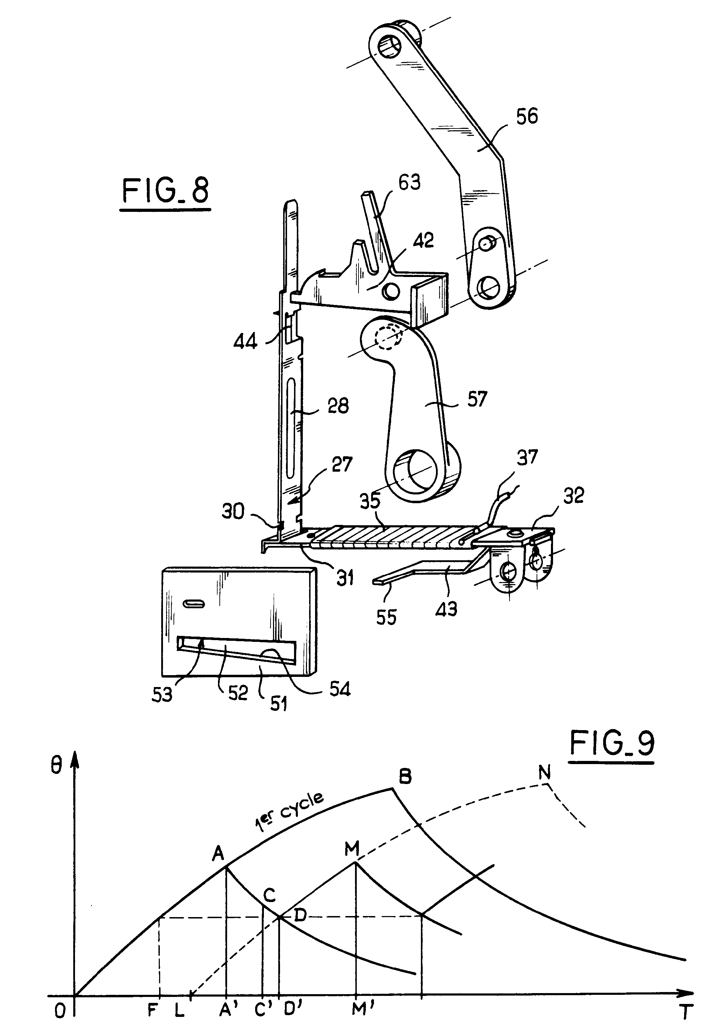

Ce dispositif comprend une lame métallique 27 s'étendant verticalement et rigidifiée sur la quasi-totalité de sa longueur grâce à une nervure matricée 28 (voir notamment figures 7 et 8) prolongée par une partie supérieure de section en U 39. L'extrémité inférieure 30 de la lame 27 est rétrécie de façon à localiser la flexion de cette lame à ce niveau.

L'extrémité inférieure de la lame 27 est rendue solidaire d'un bilame 31 s'étendant sensiblement perpendiculairement à la lame 27.

L'extrémité 32 du bilame 31 comporte une patte 33 articulée sur un axe 34 solidaire de la platine 15.

Autour du bilame 31 est enroulée une résistance électrique chauffante 35 connectée électriquement entre un fil conducteur nu 36 en contact avec la lame 27 et un fil conducteur isolé 37.

La mise en circuit et hors circuit de la résistance chauffante 35 est réalisée par coopération entre une lamelle élastique de connexion 38 et la partie supérieure 39 de la lame 27.

Le déplacement de la lamelle 38 vers la partie 39 précitée est limité par une butée fixe 40.

Dans la position représentée sur la figure 4, la partie supérieure 39 de la lame 27 est écartée de la lamelle 38 et le chariot 17 est en position haute. La résistance chauffante 35 n'est pas alimentée.

Dans la position représentée sur la figure 5, le chariot 17 est en position basse et un ergot 41 ménagé sur l'extrémité du bras 42 du mécanisme 25 prend appui sur la lame 27 et maintient l'extrémité 39 de celle-ci en contact avec la lamelle 38.

En outre, le chariot 17 prend appui sur une barre de connexion 38a reliée à la lamelle 38, fermant ainsi un interrupteur électrique 38b assurant l'alimentation électrique de la barre de connexion 38a.

La résistance chauffante 35 est de ce fait alimentée en courant électrique.

Cette résistance chauffante 35 échauffe alors le bilame 31. Celui-ci s'incurve et provoque la montée de la lame 27 (voir figure 6), étant entendu qu'un organe 43 qui sera décrit plus loin limite le pivotement du bilame 31 autour de l'axe 34.

Durant la montée de la lame 27, la partie 39 de celle-ci glisse sur la lamelle élastique 38 et l'alimentation électrique de la résistance 35 est maintenue jusqu'à ce que l'ergot 41 du bras 42 pénètre dans une fenêtre 44 ménagée dans la lame 27 (voir également la figure 7).

Du fait de cet engagement, la lame 27 fléchit élastiquement vers le bras 42 et la partie 39 de la lame s'écarte de la lamelle 38 et prend appui contre la butée 26. La résistance chauffante 35 est alors mise hors circuit.

L'alimentation électrique de la résistance 35 étant coupée, le bilame 31 tend à reprendre sa position de repos. Lors de ce déplacement, la lame 27 est tirée dans le sens de la flèche F₄. Etant donné que l'ergot 41 du bras 42 est retenu dans la fenêtre 44 de la lame, cet ergot 41 est tiré vers le bas, ce qui provoque le basculement du bras 42, le dégagement du bec 24 du cran de retenue 45 de la butée 26, l'échappement de l'ergot 41 de la fenêtre 44, et la remontée du chariot 17 sous l'action du ressort de rappel 21.

Pour remettre le grille-pain en position de fonctionnement, il suffit de rabaisser manuellement le chariot 17 jusqu'à la position indiquée sur la figure 5, dans laquelle le bec 24 du bras 42 vient s'accrocher au cran de retenue 45 de la butée 26. Ce mode de verrouillage est facilité par le fait que l'extrémité du bras 42 comporte entre l'ergot 41 et le bec 24 une surface courbe 46 qui peut glisser sur une rampe inclinée 47 ménagée sur la butée 26 en amont du cran de retenue 47.

Lorsque cette remise en position de fonctionnement est effectuée peu de temps après la remontée automatique du chariot 17, le bilame 31 n'est pas revenu à la température ambiante et de ce fait n'a pas entièrement retrouvé sa position de repos.

Dans ce cas, la distance existant entre la fenêtre 44 et l'ergot 41 du bras 42 est plus faible que dans le cas où le bilame 31 a entièrement repris sa forme et position initiale.

Ainsi, après mise en circuit de la résistance de chauffage du bilame 31, celui-ci va très rapidement reprendre la position représentée sur la figure 6, dans laquelle l'ergot 41 s'engage dans la fenêtre 44 et après quoi la résistance 35 est mise hors circuit et le chariot 17 remonte. Dans ce cas, les tranches de pain portées par le chariot 17 ont été insuffisamment exposées au rayonnement des résistances situées dans le grille-pain et de ce fait ne sont pas suffisamment grillées.

Pour remédier à cet inconvénient, l'invention prévoit un système de compensation 50 que l'on va maintenant décrire.

Le terme "compensation" définit le temps que l'appareil doit déduire automatiquement du réglage du grille-pain, après une première mise en service, pour obtenir le même grillage du pain lors de la deuxième mise en service, puis des Nièmes suivantes. En effet, lors du départ à froid, le temps de grillage est, par exemple, pour un grillage moyen (indice 3), de 160''. Après 20'' d'arrêt (enlèvement du pain grillé et rechargement), le grille-pain est remis en marche. Le temps de fonctionnement doit alors être de 120'' pour obtenir le même grillage du pain. La compensation est, dans ce cas de 25%.

Cette compensation est obtenue de construction. Le refroidissement du bilame, et donc sa déflexion, est une image du refroidissement de la carcasse du grille-pain (barreaux chauffants, réflecteurs, grille, carrosserie, et autres).

Pour un système thermique idéal, les courbes de montée en température ainsi que les courbes de refroidissement sont répétitives.

Ces courbes sont illustrées par la figure 9 qui représente en ordonnées la température Θ et en abscisses le temps T.

Sur cette figure, les lettres utilisées désignent respectivement :
- OAB: première courbe de montée en température (indice de réglage : 6)
- A: coupure de la chaufferette 31 (et des barraux chauffants) pour l'indice de réglage: 1
- OA': temps de 1ère chauffe, pour l'indice de réglage 1
- AC: refroidissement de la chaufferette
- C: remontée du chariot (fin de cycle)
- D: réarmement
- C'D': temps nécessaire au déchargement-rechargement
- OF: représente la compensation thermique
- LMN: courbe de montée en température, dont le tronçon DM est utilisé lors de la Nième mise en marche.

En réalité, vient s'ajouter au simple refroidissement un phénomène d'hystérésis du bimétal, propre à la matière et aux épaisseurs de ses composants, à la liaison moléculaire entre ceux-ci, et à d'autres raisons. Cette hystérésis est d'autant plus élevée que la température du bilame est élevée. Elle vient s'ajouter au temps de compensation dû à la température de réenclenchement.

Le système 50 comprend un organe 51 situé en regard du bilame 31 et monté coulissant dans des glissières horizontales non représentées. L'organe 51 comporte une fente 52 s'étendant sensiblement dans la direction du bilame 31 et sous celui-ci. Cette fente 52 délimite une rampe supérieure 53 et une rampe inférieure 54.

Dans cette fente 52 est engagé un bras 43 rendu solidaire de l'extrémité 32 du bilame adjacent à la patte articulée 33. L'extrémité de ce bras 43 porte un talon 44 qui prend appui soit sur la rampe supérieure 53, lorsque le bilame 32 est au repos (voir figures 4 et 5), soit sur la rampe inférieure 54 lorsque le bilame est incurvé (voir figure 6).

Ainsi, au début du chauffage de la résistance 35, l'incurvation du bilame 31 n'entraîne aucun déplacement vers le haut de la lame 27, car pendant cette période, le bilame 31 s'incurve en déplaçant le talon 55 du bras 43 de la rampe supérieure 53 vers la rampe inférieure 54 par pivotement autour de l'axe 34. Ainsi, ce n'est que lorsque le talon 53 prend appui sur la rampe inférieure 54 que l'incurvation subséquente du bilame 31 entraîne un déplacement vers le haut de la lame 27.

Par conséquent, la distance d (voir figure 6) comprise entre le talon 55 et la rampe supérieure 55 détermine la durée pendant laquelle l'incurvation du bilame 31 ne produit aucun déplacement de la lame 27.

Il en résulte donc que lorsque le bilame 31 est froid, c'est-à-dire non incurvé (voir figures 4 et 5), la durée pendant laquelle le chariot 17 est en position basse (et pendant laquelle les tranches de pain sont exposées au rayonnement des résistances) est égal à la durée nécessaire pour déplacer le talon 55 selon la distance d, plus celle nécessaire pour déplacer la lame 27 jusqu'à ce que l'ergot 41 s'engage dans la fenêtre 44.

En revanche, lorsqu'après une première utilisation, le chariot 17 est remis en position basse et que le bilame 31 est encore chaud et incurvé, de sorte que le talon 55 est en appui sur la rampe inférieure 54, la durée précitée est réduite à celle nécessaire pour déplacer la lame 27.

Compte tenu de la pente des rampes 54 et 55, la distance d précitée varie en fonction de la position du talon 55 par rapport à ces rampes. Cette distance d peut être réglée en déplaçant le bloc 51 vers la droite ou vers la gauche, ce qui a pour effet de régler le temps de grillage des tranches de pain.

La rampe inférieure 54 permet de régler l'inclinaison du bilame 31, et donc de déterminer le temps du maintien sous tension de la chaufferette 35 et des barreaux chauffants du grille-pain. La rampe supérieure 53 (dont la pente est inférieure à celle de la rampe 54) permet de modifier le point d'arrêt de cycle sur la courbe de refroidissement, ce qui agit sur la compensation par modification de la température de reprise au cycle suivant. Elle présente une pente telle que, pour un réglage de durée longue, le talon 55 ne puisse pas remonter aussi haut que pour une durée courte.

Pour résumer, la rampe 54 permet de régler le temps de chauffe, tandis que la contre-rampe 53 permet de modifier le point de coupure dans la courbe de refroidissement.

Une autre particularité importante de l'invention réside dans la structure du mécanisme 25 associé au chariot 17.

Il s'agit d'un mécanisme à genouillère. Ce mécanisme se compose de deux bielles 56 et 57 articulées, parallèles à la platine 15 (voir figures 4, 5 et 8).

La biellesupérieure 56 a son extrémité articulée en 58 à la platine. Son extrémité opposée est reliée par une articulation 59 à la bielle inférieure 57 qui est elle-même reliée par une articulation 60 au chariot 17. Comme déjà indiqué précédemment, ce chariot 17 peut coulisser verticalement, son déplacement étant guidé par la tige 18 (voir figure 2).

Le levier intermédiaire 42 s'étend transversalement à la bielle supérieure 56 et il est relié à celle-ci par un tourillon 61. La rotation du levier 42 est limitée par un bras ressort 63 transversal à ce dernier s'étendant dans la direction de la bielle 56 et dont l'extrémité 63a est guidée entre deux saillies 64 solidaires du levier 56. Comme déjà décrit précédemment, l'extrémité du levier intermédiaire 42 présente une surface courbe 46 en arrière de laquelle est pratiqué un bec d'accrochage 24 susceptible de se verrouiller à un cran de retenue 45 ménagé sur une butée 26, comme indiqué sur la figure 5.

Dans la position indiquée sur la figure 5, la force F₅ exercée par le ressort du chariot 17 tend à ramener celui-ci vers le haut. Le point d'articulation 59 des bielles 56 et 57 étant situé en-deça de la ligne rejoignant les articulations extrêmes 58 et 60, cette force F₅ donne naissance à une résultante horizontale F₇ (voir figure 5), qui, ramenée au niveau du levier intermédiaire 42, tend à appliquer le cran 45 contre le bec 24.

Le déverrouillage du bec 24 par rapport au cran 45 est assuré en tirant l'extrémité du levier 42 vers le bas (voir flèche F₆ sur la figure 5).

Sous l'effet de cette force F₆, le levier 42 pivote légèrement autour de 61 contre l'action du rappel exercé par le bras ressort 63.

La force nécessaire pour faire pivoter le levier 42 est de l'ordre de 60 et 100 g. Comme déjà expliqué précédemment, cette force est engendrée lors du refroidissement du bilame 31 qui génère une traction vers le bas de la lame 27.

Après pivotement du levier 42, le mécanisme 25 prend la position représentée sur la figure 4. Pour reverrouiller le chariot 17 en position basse, il suffit de tirer ce dernier vers le bas au moyen de la poignée prévue à cet effet, ce qui amène automatiquement l'extrémité du levier 42 en regard de la butée 26. En poursuivant le mouvement, la partie courbe 46 de l'extrémité du levier 42 glisse sur la rampe 47 de la butée, ce qui entraîne une déformation élastique du bras ressort 63 et en fin de course le bec 24 vient s'accrocher au cran de retenue 45.

Bien entendu, l'invention n'est pas limitée aux exemples de réalisation que l'on vient de décrire et on peut apporter à ceux-ci de nombreuses modifications sans sortir du cadre de l'invention selon la revendication 1.

## Revendications

1. Dispositif mécanique (25) de verrouillage et déverrouillage d'un chariot porte-pains (17), monté coulissant verticalement dans un grille-pain, ce dispositif (25) assurant le verrouillage en position basse du chariot (17) dont la remontée est assurée par un ressort de rappel, et comprenant une bielle supérieure (56) articulée à une bielle inférieure (57), l'extrémité de la bielle supérieure (56) opposée à l'articulation commune (59) étant articulée en un point fixe (58) et l'extrémité de la bielle inférieure (57) opposée à l'articulation commune (59) étant articulée au chariot (17), un moyen de retenue coopèrant avec l'une ou l'autre bielle (56, 57) ou avec leur axe (59) d'articulation pour maintenir momentanément le chariot (17) en position basse, caractérisé en ce que ledit moyen est un levier intermédiaire (42) s'étendant transversalement à la bielle supérieure (56) et articulé à cette dernière contre l'action d'un ressort (61), l'extrémité de ce levier (42) comprenant un bec (24) susceptible de s'accrocher à un cran de retenue fixe (45) lorsque le chariot (17) est déplacé en position basse, ce verrouillage étant maintenu par la force exercée vers le haut du ressort de rappel du chariot (17), des moyens (27, 44) étant prévus pour appliquer une traction (F₆) à l'extrémité du levier intermédiaire (42) pour faire pivoter celui-ci et déverrouiller le bec (24) par rapport au cran (45) afin de permettre la remontée du chariot (17).

2. Dispositif conforme à la revendication 1, caractérisé en ce qu'en position de verrouillage la droite rejoignant l'articulation fixe (58) de la bielle supérieure (56) et l'articulation (60) de la bielle inférieure (57) au chariot (17) est située légèrement en-deçà de l'articulation commune (59) des deux bielles, la force de rappel (F₃) du ressort du chariot (17) s'exercant dans un plan vertical s'étendant au-delà de l'articulation commune (59) précitée.

3. Dispositif conforme à l'une des revendications 1 ou 2, caractérisé en ce que les moyens pour appliquer une traction sur l'extrémité du levier (42) comprennent une lame (27) reliée à un bilame (31) pouvant s'incurver sous l'effet de la chaleur, cette lame (27) et cette extrémité du levier comprenant des moyens de verrouillage complémentaires (44, 41) et ce bilame (31) étant capable de réaliser sur la lame (27) une traction suffisante pour faire pivoter le levier (42) et déverrouiller celui-ci.

## Patentansprüche

1. Mechanische Vorrichtung (25) zur Verriegelung und Entriegelung eines in einem Brottoaster vertikal gleitend angebrachten Brotschlittens (17), wobei diese Vorrichtung (25) die Verriegelung des Schlittens (17) in der unteren Position bewirkt, dessen Hochheben durch eine Rückstellfeder bewirkt wird, mit einer oberen Stange (56), die an einer unteren Stange (57) angelenkt ist, wobei das dem gemeinsamen Gelenk (59) gegenüberliegende Ende der oberen Stange (56) an einem festen Punkt (58) angelenkt ist und das dem gemeinsamen Gelenk (59) gegenüberliegende Ende der unteren Stange (57) am Schlitten (17) angelenkt ist, und wobei ein Rückhaltemittel mit der einen oder der anderen Stange (56, 57) oder mit deren Gelenkachse (59) zusammenwirkt, um den Schlitten (17) vorübergehend in der unteren Position zu halten, dadurch gekennzeichnet, daß das Mittel ein Zwischenhebel (42) ist, der sich quer zur oberen Stange (56) erstreckt und an der letzteren gegen die Wirkung einer Feder (63) angelenkt ist, wobei das Ende dieses Hebels (42) eine Nase (24) aufweist, die dazu geeignet ist, in eine feste Rückhaltekerbe (45) einzuhaken, wenn der Schlitten (17) in die untere Position verschoben wird, wobei diese Verriegelung durch die nach oben wirkende Kraft der Rückstellfeder des Schlittens (17) aufrechterhalten wird, wobei Mittel (27, 44) vorgesehen sind, um auf das Ende des Zwischenhebels (42) eine Zugkraft (F₆) auszuüben, um den Zwischenhebel (42) zu schwenken und die Nase (24) in bezug auf die Kerbe (45) zu entriegeln, um das Hochheben des Schlittens (17) zu gestatten.

2. Vorrichtung gemäß Anspruch 1, dadurch gekennzeichnet, daß in der Verriegelungsposition die die feststehende Gelenkachse (58) der oberen Stange (56) mit der Gelenkachse (60) der unteren Stange (57) am Schlitten (17) verbindende Gerade etwas diesseits der gemeinsamen Gelenkachse (59) der beiden Stangen liegt, wobei die Rückstellkraft (F₃) der Feder des Schlittens (17) in einer vertikalen Ebene wirkt, die sich jenseits der oben genannten gemeinsamen Gelenkachse (59) erstreckt.

3. Vorrichtung gemäß einem der Ansprüche 1 oder 2, dadurch gekennzeichnet, daß die Mittel zum Ausüben einer Zugkraft auf das Ende des Hebels (42) einen Streifen (27) umfassen, der mit einem Bimetallstreifen (31) verbunden ist, der sich unter der Hitzewirkung verbiegen kann, wobei der Streifen (27) und dieses Ende des Hebels komplementäre Verriegelungsmittel (44, 41) umfassen und wobei dieser Bimetallstreifen (31) auf den Streifen (27) eine Zugkraft ausüben kann, die ausreicht, um den Hebel (42) zu schwenken und diesen zu entriegeln.

## Claims

1. A mechanical device (25) for locking and unlocking a bread holder carriage mounted to be vertically slidable in a toaster, the device (25) locking the carriage (17) in its bottom position, the upward movement of the carriage being provided by a return spring, said device comprising an upper link (56) articulated to a lower link (57), the end of the upper link (56) remote from the common articulation (59) being articulated at a fixed point (58) and the end of the lower link (57) remote from the common articulation (59) being articulated to the carriage (17), a retaining means co-operating with either link (56, 57) or with their pivot (59) to hold the carriage (17) in the bottom position temporarily, characterised in that the said means is an intermediate lever (42) extending transversely of the upper link (56) and articulated to the latter against the action of a spring (63), the end of said lever (42) comprising a projection (24) adapted to engage in a fixed retaining notch (45) when the carriage (17) is moved into the bottom position, this locking effect being maintained by the upwardly exerted force of the return spring for the carriage (17), means (27, 44) being provided to apply a traction (F₆) to the end of the intermediate lever (42) to pivot the same and release the projection (24) from the notch (45) to enable the carriage (17) to move upwards.

2. A device according to claim 1, characterised in that in the locked position the straight line connecting the fixed articulation (58) of the upper link (56) and the articulation (60) of the lower link (57) to the carriage (17) is situated slightly short of the common articulation (59) of the two links, the return force (F₃) of the spring of the carriage (17) being exerted in a vertical plane extending beyond the said common articulation (59).

3. A device according to claim 1 or 2, characterised in that the means for applying traction to the end of the lever (42) comprise a strip (27) connected to a bimetallic strip (31) which can curve in response to the heat, said strip (27) and said lever end comprising complementary locking means (44, 41) and said bimetallic strip (31) being capable of applying to the strip (27) sufficient traction to pivot the lever (42) and unlock the same.
